# FASCICULE DE BREVET EUROPEEN

(11) **EP 0 501 863 B1**
(45) Date de publication et mention de la délivrance du brevet: **23.11.1994**
(21) Numéro de dépôt: 92400467.4
(22) Date de dépôt: 24.02.1992
(51) Int. Cl.: B09B 3/00

(54) **Procédé et installation de destruction de déchets de laboratoire**
Verfahren und Vorrichtung zur Vernichtung von Laborabfällen
Method and plant for destroying laboratory waste

(30) Priorité: 25.02.1991 FR 9102203
(43) Date de publication de la demande: 02.09.1992
(73) Titulaire: SARP INDUSTRIES, F-78520 Limay (FR); SNPE INGENIERIE, F-78184 Saint-Quentin Yvelines (FR)
(72) Inventeur: Baronquel, Pierre, Cabinet BALLOT-SCHMIT, F-75116 Paris (FR); Biros, Jean-Louis, Cabinet BALLOT-SCHMIT, F-75116 Paris (FR)
(74) Mandataire: Schmit, Christian Norbert Marie

(56) Documents cités:
- EP-A- 0 013 822
- EP-A- 0 208 660
- DE-A- 3 837 656
- GB-A- 1 299 192

## Description

La présente invention a trait au domaine du traitement des déchets et résidus nocifs et concerne tout spécialement un procédé et une installation adaptée pour la destruction, sans risques de nuisances, de conteneurs renfermant des déchets et produits de laboratoires.

On sait que les déchets et résidus de réactions et traitements divers, dans les laboratoires ou petites installations, se caractérisent par une très grande diversité de composition et une faible quantité unitaire, par exemple de quelques centaines de grammes à quelques kilos au maximum. Ces déchets, la plupart du temps nocifs et polluants, sont généralement récupérés dans des récipients en matériaux divers tels que verre, matériaux composites, matière plastique , métal ou autre.

Les manipulations, connues jusqu'ici, pour se débarasser de ces déchets consistent généralement en une ouverture manuelle des conditionnements puis éventuellement en des analyses de chaque contenu et, enfin, en des traitements proprements dits qui doivent être adaptés à chaque type et à chaque forme (solide, liquide, pulvérulente...) de composition.

Ces manipulations sont très souvent extrêmement dangereuses, notamment lors de l'ouverture des récipients qui peuvent laisser exhaler des vapeurs toxiques ou contenir des produits agressifs pour la peau. Elles exigent donc une infinité de précautions et, en particulier, le port d'une tenue spéciale de protection. En outre, elles entraînent des coûts importants tant au niveau des multiples analyses nécessaires que lors des traitements de destruction qui doivent être adaptés à chaque cas particulier ou groupe de déchets.

Le but principal de l'invention est de proposer un procédé et une installation de mise en oeuvre permettant de s'affranchir de tous les inconvénients précités grâce à la suppression de toute intervention manuelle, de toute analyse préalable et à la possibilité d'une destruction automatique des conteneurs, avec récupération des matériaux, sans danger de manipulation.

Selon le principe et la définition la plus générale du procédé, on utilise l'onde de choc créée par une explosion en milieu immergé pour procéder au bris des emballages tels que flacons ou conteneurs similaires renfermant des déchets et produits dangereux.

Plus précisément, le procédé selon l'invention est essentiellement caractérisé en ce que les flacons, disposés en rangées dans des paniers à grillage métallique, avec interposition de cordeaux détonants, sont immergés en bassin et soumis à une explosion en eau relativement profonde, après quoi les paniers sont relevés et soumis à un lavage, les flacons détruits étant recyclés ou envoyés en décharge, alors que les déchets, accumulés et/ou dilués progressivement dans le bassin, sont éliminés progressivement et traités de façon connue en soi.

On sait que l'explosion dans l'eau d'un produit détonant se caractérise par la création d'une onde de choc puis l'apparition d'une bulle de gaz de pression. L'onde de choc transporte l'énergie maximale mais, par contre, les pressions secondaires de pulsation de la bulle ont une action plus prolongée. C'est précisément ce type d'explosion que l'on met en oeuvre pour provoquer le bris des conteneurs de déchets nocifs en utilisant les ondes de choc qui accompagnent la formation de bulles de gaz. Du fait que l'on opère en milieu immergé, les gaz éventuellement générés lors du bris des flacons sont lavés dans l'eau du bassin. En outre les courants gazeux produits lors du cassage des bulles sont utilisés comme moyens d'agitation naturelle de l'eau du bassin ou piscine.

Pour une mise en oeuvre correcte du procédé, il convient d'utiliser des matières explosibles aptes à résister au moins une minute à l'immersion dans l'eau de la piscine. Un explosif comme la penthrite convient bien à cet effet mais d'autres matériaux satisfaisant à la condition précitée peuvent bien entendu convenir. Un détonateur approprié est placé contre le ou les cordeaux explosifs et il convient évidemment, comme il sera expliqué plus loin, de déterminer pour chaque cas de figure la quantité maximale d'explosif et de détonateur à utiliser en fonction du volume de la piscine et du nombre de flacons (ou équivalents) à traiter lors de chaque tir.

La profondeur à laquelle doivent être immergés les paniers de flacons et les cordeaux détonants associés constitue un facteur critique. Il est important, en effet, que la bulle de gaz générée par l'onde de choc et qui prend généralement une forme sphérique puisse se rompre ou éclater à la surface de l'eau avant qu'elle n'attaque la paroi du bassin d'eau, ceci afin d'éviter les problèmes de pulsation de bulles et donc des phénomènes de résonance. Il est important, également, d'empêcher la surpression sur les parois du bassin, consécutive à la dilatation des gaz. Lors des essais effectués chez la Demanderesse et compte-tenu de l'installation qui sera décrite ci-après, à titre d'exemple, il a été déterminé que la profondeur d'immersion devait atteindre au moins 1 mètre et se situait généralement entre 1 et 2,5 mètres.

Conformément à l'invention, une installation de destruction de déchets de laboratoires comprend essentiellement : a) au moins un bassin ou piscine remplie d'eau à une profondeur d'au moins deux mètres ; b) des moyens de transport et immersion dans l'eau des flacons ou conteneurs similaires, de déchets ; et : c) des moyens associés pour provoquer la mise en explosion des conteneurs à un moment prédéterminé.

Selon une réalisation préférée, la piscine est constituée par une première cuve, en matériau résistant à la corrosion, installée, par des moyens amortisseurs, au sein d'une seconde cuve, en béton ou similaire, jouant notamment le rôle de bassin de rétention.

En pratique, la première cuve, réalisée en acier ou matériau analogue d'épaisseur suffisante, d'au moins 20 mm, est munie sur son pourtour interne d'une canalisation perforée qui a pour but de récupérer les gaz générés lors des explosions et de permettre leur recyclage dans le fond de la cuve dans le but de créer un courant ascendant de minibulles dans la cuve. En outre cette dernière est avantageusement pourvue d'un moyen de protection contre les projections de liquide et pour la sécurité du ou des opérateurs. Par exemple, ce moyen peut être constitué par une tôle déployée de quelques dizaines de centimètres de large, disposée en périphérie de la cuve.

Les moyens de stockage et d'immersion des conteneurs à déchets dans l'eau de la première cuve sont constitués par des séries, de paniers métalliques, véhiculés par des rails de transport, de préférence réalisés en grillage de maille assez fine pour retenir les brisures et morceaux de conteneurs lorsque, notamment, ces derniers sont constitués de flacons de verre. Il a été constaté, lors des études et essais, qu'il était préférable de disposer les conteneurs en plusieurs rangées concentriques (au moins deux) selon une configuration circulaire ou elliptique de façon à optimiser la quantité d'explosifs et détruire la plus grande quantité de récipients. Le cordeau d'explosif est disposé entre les rangées de conteneurs, l'espace entre deux rangées étant d'environ 1 à 3 cm. Les paniers sont avantageusement munis d'un couvercle amovible de façon que les conteneurs, vidés après l'explosion, ne flottent pas à la surface de l'eau. Avantageusement, on peut placer au fond de la première cuve un panier de plus grande dimension, à mailles très fines, afin de réceptionner les petits éclats de verre.

L'invention sera mieux comprise par une description détaillée d'un exemple de réalisation non limitatif, illustré par les planches de dessins annexées qui représentent schématiquement :
- Figure 1 : une installation de destruction de conteneurs à déchets, par moyens explosifs, avec les principales annexes de son implantation sur une aire appropriée de traitement ;
- Figure 2 : une vue de dessus d'un bassin d'immersion pour les conteneurs ;
- Figure 3 : une vue en coupe du bassin de la figure 2, illustrant particulièrement la cuve interne et ses principaux moyens d'équipement ;
- Figure 4 : une vue de dessus d'un arrangement des conteneurs à détruire dans leur panier de transport ;
- Figure 5 : une variante de structure d'un panier de transport ;
- Figure 6 : une vue plus détaillée du type de canalisation équipant la cuve interne de la figure 3.

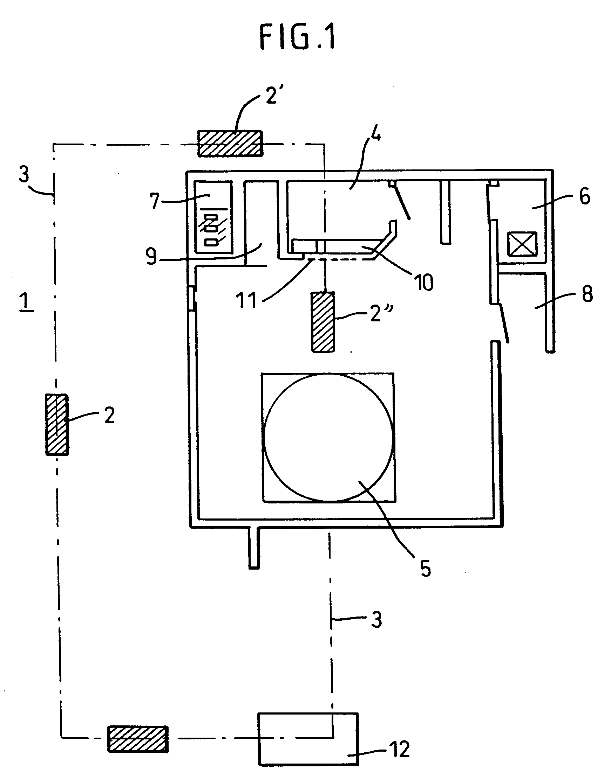

Selon l'installation générale schématisée sur la figure 1, les conteneurs, par exemple des bouteilles chargées de déchets à détruire, sont chargés depuis une aire appropriée 1 dans des séries de paniers de stockage -dont un seul 2 en circulation a été représenté par simplification- véhiculés par rail transporteur 3. Une fois chargé de bouteilles, le panier 2' traverse un local de commande 4 et s'arrête en position 2'' entre le local 4 et la piscine 5. Dans cette position, le panier 2'' est descendu à une distance d'environ un mètre du sol. Le pyrotechnicien chargé de l'opération place le cordeau d'explosif au contact des bouteilles, comme il sera expliqué plus loin. Les cordeaux sont stockés dans le local 6, alors que des détonateurs sont entreposés dans le local 7, chacun de ces locaux étant bien entendu muni d'aires ou sas 8, 9 de sécurité. Le pyrotechnicien va ensuite chercher le détonateur dans le local 7 et le dispose sur le cordeau. Il retourne ensuite dans le local de commande 4 muni d'une pièce de mise à feu 10 avec hublot 11 de surveillance. Le pyrotechnicien procède alors au déplacement, à distance, du panier 2'' vers le centre de la piscine 5 et effectue le contrôle de ligne lorsque le panier se trouve au-dessus de la piscine, cecipour permettre aux éclats de verre d'être rejetés à l'eau en cas de mise à feu intempestive. Le panier 2'' est ensuite descendu dans l'eau à une profondeur de un mètre environ puis le tir est effectué. Le relevage du panier hors de la piscine est avantageusement suivi par un rinçage (non représenté ici) avant l'évacuation vers un bas de récupération 12 des conteneurs brisés.

En pratique, la hauteur d'eau dans la piscine est d'au moins deux mètres, par exemple 2,5 à 3 m, le volume d'eau correspondant à au moins 20 m³ . Pour chaque panier de flacons, comme il sera expliqué ci-après, la quantité d'explosif, par exemple de la pentrite, est généralement comprise entre 7 et 10 g pour un poids de détonateur de 0,4 à 0,8 g environ par exemple de type N28B).

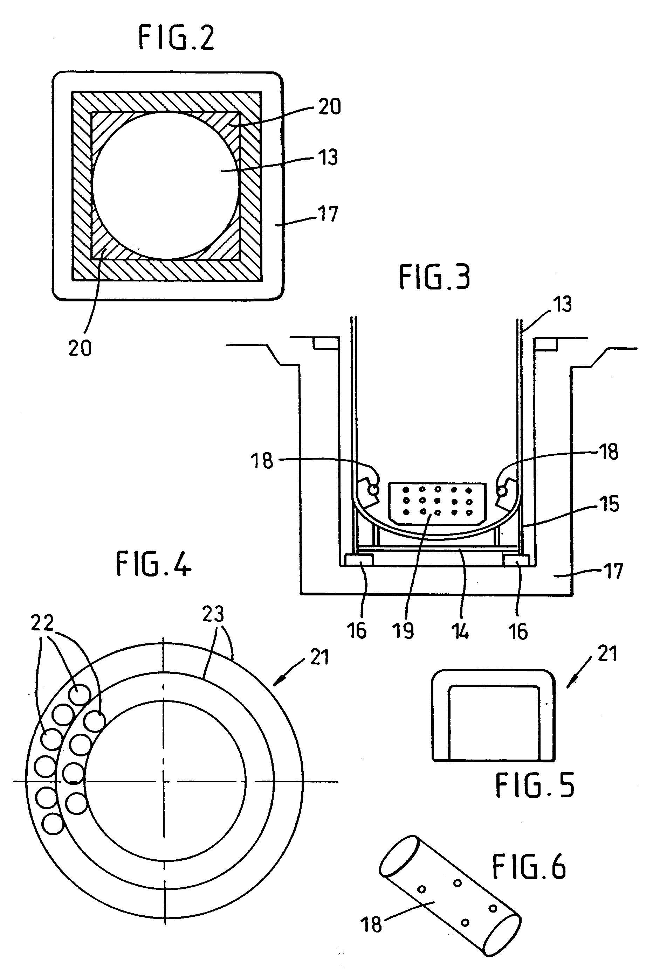

La piscine utilisée pour les tirs et telle qu'illustrée ici sur les figures 2 et 3, comprend une première cuve 13 reposant sur un radier 14 par l'intermédiaire d'une jupe 15 et de moyens amortisseurs 16 de type "silent-block" ou analogue. Cette cuve est elle-même prévue à l'intérieur d'un bassin ou seconde cuve 17, de préférence en béton qui sert de bassin de rétention. La cuve 13 est munie d'une tuyauterie ou canalisation perforée 18 servant de guide à la circulation des gaz. Ces gaz sont renvoyés dans le fond de cuve et traversent une plaque perforée 19 pour créer un courant ascendant de minibulles dans la cuve de tir 13. Une plaque de protection 20 est prévue autour de la cuve 13 à titre de sécurité.

Le panier 21 destiné à stocker et transporter les flacons ou autres conteneurs est réalisé en grillage métallique à fines mailles. Il peut avoir diverses formes, par exemple circulaire (fig. 4) parallélépipédique (fig. 5) ou encore elliptique (non représentée ici). Chaque panier comporte plusieurs rangées de flacons 22 (dont deux ont été représentés sur la figure 4). Le cordeau 23 d'explosif est intercalé à faible distance, par exemple 1 à 2 cm, entre chaque rangée de flacons. En pratique la masse de cordeau explosif et de détonateur, pour chaque panier, est en général maintenue au maximum à 10g pour un panier pouvant contenir 70 flacons.

Les flacons (ou autres conteneurs) détruits par l'explosion en milieu immergé sont soit recyclés (par exemple verre), soit envoyés en décharge soit encore solidifiés avec le déchet par l'une des techniques de solidification déjà connues.

La concentration en déchets augmentant peu à peu dans la cuve de tirs 13, il est nécessaire de la vider périodiquement, par exemple lorsque ladite concentration atteint 15 à 25 %.

Grâce à une telle installation selon l'invention, on peut disposer d'un ensemble automatique permettant de détruire, avec une main d'oeuvre réduite au minimum, une grande quantité de flacons à l'heure. Par exemple la Demanderesse a conçu sur les bases précitées une installation générale prévue pour la destruction de 2000 flacons de 1 litre par période de 8 heures.

## Revendications

1. Procédé pour la destruction de déchets de laboratoires ou analogues, enfermés dans des conteneurs de type flacons ou similaires, caractérisé en ce que les flacons, disposés en rangées dans des paniers à grillage métallique, avec interposition de cordeaux détonants, sont immergés en bassin et soumis à une explosion en eau relativement profonde, après quoi les paniers sont relevés et soumis à un lavage, les flacons détruits étant recyclés ou envoyés en décharge, alors que les déchets, accumulés et/ou dilués progressivement dans le bassin, sont éliminés périodiquement et traités de façon connue en soi.

2. Procédé selon la revendication 1, caractérisé en ce que les cordeaux explosifs et détonateurs associés sont choisis pour résister à une immersion dans l'eau pendant au moins 1 minute.

3. Procédé selon l'une quelconque des revendications 1 ou 2, caractérisé en ce que la profondeur d'immersion dans l'eau du bassin est d'au moins 1 mètre et généralement comprise entre 1 et 2,5 mètres.

4. Installation pour la mise en oeuvre du procédé selon l'une quelconque des revendications 1 à 3, comprenant : a) au moins un bassin ou piscine remplie d'eau à une profondeur d'au moins deux mètres ; b) des moyens pour transporter automatiquement et immerger dans l'eau de la piscine les flacons, ou conteneurs similaires de déchets ; c) des moyens associés auxdits moyens de transport pour provoquer la mise en explosion des flacons à un moment prédéterminé.

5. Installation selon la revendication 4, caractérisée en ce que la piscine est constituée par une première cuve (13), en matériau résistant à la corrosion, montée sur des moyens amortisseurs (16) à l'intérieur d'une seconde cuve (17) en béton ou analogue jouant le rôle de bassin de rétention.

6. Installation selon la revendication 5, caractérisée en ce que la première cuve (13) est munie au niveau de sa paroi périphérique interne d'une canalisation perforée (18) où les gaz générés sont aspirés puis renvoyés dans le fond (19) de ladite cuve pour créer un courant ascendant de minibulles dans cette dernière ; et en ce que la périphérie externe de ladite première cuve est assujettie à un moyen de protection (20) contre les projections de liquide.

7. Installation selon l'une quelconque des revendications 4 à 6, caractérisée en ce que les moyens d'immersion des conteneurs dans l'eau de la piscine sont constitués par des paniers (21) à fin grillage métallique où les conteneurs (22) sont disposés en au moins deux rangées concentriques selon une configuration circulaire ou elliptique, lesdits paniers étant véhiculés dans ledit bassin par rail de transport automatisé (3).

8. Installation selon les revendications 4 et 7, caractérisée en ce que les moyens de mise en explosion des conteneurs sont constitués par des cordeaux d'explosifs continus (23), disposés entre chacune desdites rangées concentriques de conteneurs (22), un détonateur étant disposé, avant l'immersion, sur un cordeau pour chaque panier.

9. Installation selon l'une quelconque des revendications 4 à 8 pour la destruction, en système automatique, de conteneurs à déchets, caractérisée en ce qu'elle est intégrée dans un ensemble comprenant : une aire de chargement (1) des paniers (2, 2', 2'') ; un local de stockage des cordeaux d'explosif (6) ; un local de stockage des détonateurs (7), avec aires de sécurité (8, 9) ; et un système de récupération (12) des conteneurs brisés.

## Claims

1. Method for the destruction of laboratory waste or similar, enclosed in containers of the flask or similar type, characterised in that the flask, disposed in rows in baskets with a metal mesh, with the interposing of detonating fuses, are immersed in a reservoir and subjected to an explosion in relatively deep water, after which the baskets are raised and washed, the destroyed flasks being recycled or disposed of, whilst the waste, accumulated and/or progressively diluted in the reservoir, is removed periodically and treated in a manner known per se.

2. Method according to Claim 1, characterised in that the explosive fuses and associated detonators are chosen so as to withstand immersion in water for at least 1 minute.

3. Method according to either one of Claims 1 or 2, characterised in that the depth of immersion in water in the reservoir is at least 1 metre and generally between 1 and 2.5 metres.

4. Installation for implementing the method according to any one of Claims 1 to 3, comprising: a) at least one reservoir or pool filled with water to a depth of at least two metres; b) means for automatically transporting the flasks or similar waste containers and immersing them in the water in the pool; c) means associated with the said transportation means for causing the explosion of the flasks at a predetermined moment.

5. Installation according to Claim 4, characterised in that the pool consists of a first tank (13), made from corrosion-resistant material, mounted on shock-absorbing means (16) inside a second tank (17) made from concrete or similar, fulfilling the role of a retention reservoir.

6. Installation according to Claim 5, characterised in that the first tank (13) is provided, on its internal peripheral wall, with a perforated pipe (18) where the gases generated are extracted and then sent to the bottom (19) of the said tank in order to create a rising current of mini-bubbles in the latter; and in that the external periphery of the said first tank is secured to a means of protection (20) against splashing of liquid.

7. Installation according to any one of Claims 4 to 6, characterised in that the means of immersing the containers in the water in the pool consist of baskets (21) with a fine metal mesh in which the containers (22) are disposed in at least two concentric rows in a circular or elliptical configuration, the said baskets being conveyed into the said reservoir by means of an automated conveyor rail (3).

8. Installation according to Claims 4 and 7, characterised in that the means of exploding the containers consist of continuous explosive fuses (23) disposed between each of the said concentric rows of containers (22), a detonator being disposed, before immersion, on a fuse for each basket.

9. Installation according to any one of Claims 4 to 8 for the destruction of waste containers in an automatic system, characterised in that it is integrated into an assembly comprising: an area (1) for loading the baskets (2, 2', 2''); a room for storing explosive fuses (6); a room for storing detonators (7), with safety areas (8, 9); and a system (12) for recovering broken containers.

## Patentansprüche

1. Verfahren zur Vernichtung von Laborabfällen oder ähnlichen, die in fläschchenförmigen oder ähnlichen Vorratsbehältern eingeschlossen sind, dadurch gekennzeichnet, daß die Fläschchen, die in Reihen in Metallgitterkörben angeordnet sind, unter ZwischenLage von Knallzündschnüren, in ein Becken getaucht und einer Explosion in relativ tiefem Wasser ausgesetzt werden, worauf die Körbe wieder herausgeholt und einem Waschvorgang unterzogen werden, wobei die zerstörten Fläschchen wiederverwertet oder zur Deponie gebracht werden, während die sich im Becken angesammelten und/oder fortschreitend verdünnten Abfälle periodisch eliminiert und in an sich bekannter Weise behandelt werden.

2. Verfahren nach Anspruch 1, dadurch gekennzeichnet, daß die zugeordneten Knallschnüre und Sprengschnüre so ausgewählt werden, daß sie einem Eintauchen ins Wasser während mindestens einer Minute widerstehen können.

3. Verfahren nach Anspruch 1 oder 2, dadurch gekennzeichnet, daß die Eintauchtiefe in das Wasser des Beckens mindestens einen Meter und allgemein zwischen einem Meter und 2,5 Metern beträgt.

4. Vorrichtung zur Durchführung des Verfahrens nach einem der Ansprüche 1 bis 3, umfassend: a) mindestens ein Wasserbecken oder Reaktorbecken, das mit Wasser mit einer Tiefe von mindestens zwei Metern gefüllt ist; b) Vorrichtungen zum automatischen Transport und zum Eintauchen der Fläschchen oder ähnlichen Abfallbehältern in das Wasser des Beckens; c) mit den Transportvorrichtungen verbundene Mittel zur Auslösung der Sprengung der Fläschchen zu einem vorbestimmten Zeitpunkt.

5. Vorrichtung nach Anspruch 4, dadurch gekennzeichnet, daß das Becken aus einer ersten Wanne (13) aus korrosionsfreiem Material besteht, die auf Dämpfungsmitteln (16) im Innern einer zweiten Wanne (17) aus Beton oder ähnlichem, welche als Abstützbecken dient, montiert ist.

6. Vorrichtung nach Anspruch 5, dadurch gekennzeichnet, daß die erste Wanne (13) in Höhe des unteren Bereichs ihrer Umfangswand mit einer perforierten Leitung (18) versehen ist, in welcher die entstandenen Gase rückgeführt und dann auf den Boden (19) der Wanne zurückgeleitet werden, um eine in letzterer in kleinen Blasen aufsteigende Strömung zu erzeugen und dadurch gekennzeichnet, daß an dem oberen Umfang der ersten Wanne eine Schutzvorrichtung (20) gegen Flüssigkeitsauswurf angeordnet ist.

7. Vorrichtung nach einem der Ansprüche 4 bis 6, dadurch gekennzeichnet, daß die Vorrichtungen zum Eintauchen der Behälter in das Wasser des Beckens aus dünnen Metallkörben (21) bestehen und die Behälter (22) in mindestens zwei konzentrischen Reihen in einer kreisförmigen oder elliptischen Konfiguration angeordnet sind, wobei die Körbe in dem Becken durch einen automatisierten Schienenförderer (3) befördert werden.

8. Vorrichtung nach den Ansprüchen 4 und 7, dadurch gekennzeichnet, daß die Mittel zur Sprengung der Behälter aus fortlaufenden Sprengschnüren (23) bestehen, welche zwischen jeder der konzentrischen Reihen der Behälter (22) angeordnet sind, wobei ein Sprengzünder vor dem Eintauchen auf einer Schnur für jeden Korb angeordnet ist.

9. Vorrichtung nach einem der Ansprüche 4 bis 8 zur vollautomatischen Zerstörung der Abfallbehälter, dadurch gekennzeichnet, daß sie in einer Anordnung eingegliedert ist, umfassend einen Laderaum (1) für die Körbe (2,2',2''), einen Lagerraum für die Sprengschnüre (6), einen Lagerraum für die Sprengzünder (7) mit jeweiligen Sicherheitsräumen (8,9) und ein Rückführsystem (12) für die zerbrochenen Behälter.
